# FASCICULE DE BREVET EUROPEEN

(11) **EP 0 777 193 B1**
(45) Date de publication et mention de la délivrance du brevet: **20.03.2002**
(21) Numéro de dépôt: 96402555.5
(22) Date de dépôt: 27.11.1996
(51) Int. Cl.: G06K 7/08, G06K 7/10, G06K 19/07

(54) **Circuit d'alimentation et de modulation pour une étiquette interrogeable à distance**
Schaltung zur Stromversorgung und Modulation für eine fernabfragbare Karte
Power supply and modulation circuit for a ticket which is readable at a distance

(30) Priorité: 01.12.1995 FR 9514253
(43) Date de publication de la demande: 04.06.1997
(73) Titulaire: RAIMBAULT, Pierre, F-75008 Paris (FR)
(72) Inventeur: Raimbault, Pierre, 75008 Paris (FR); Goupil, Jean, 78740 Vaux sur Seine (FR); Rodrigue, Adérito, 14000 Caen (FR)
(74) Mandataire: Pochart, François

(56) Documents cités:
- EP-A- 0 592 224
- EP-A- 0 751 622
- WO-A-95/00922

## Description

L'invention a pour objet un circuit d'alimentation et de modulation, notamment pour une étiquette interrogeable à distance.

Elle concerne aussi une étiquette interrogeable à distance munie d'un tel circuit.

L'invention concerne généralement le domaine de l'interrogation à distance d'étiquettes électroniques à partir d'une station ou portique. Elle est susceptible d'applications nombreuses, dans des secteurs très divers. On citera par exemple:
- le contrôle, la comptabilisation et/ou la vérification d'articles achetés par un chaland dans une grande surface, et munis d'étiquettes électroniques;
- le comptage d'objets munis d'étiquettes, pour la gestion de stock dans une usine ou dans une installation industrielle;
- la reconnaissance et l'orientation d'objets munis d'étiquettes, tels que par exemple des valises dans un aéroport;
- la reconnaissance du passage d'objets munis d'une étiquette, comme par exemple des voitures à un péage, et l'échange d'informations avec les objets;
- le contrôle de l'accès à une installation ou le suivi de l'accès à une installation de personnes porteuses d'une telle étiquette électronique, etc.

D'autres applications sont possibles.

Dans toute la suite de la présente description, on emploiera simplement le terme "étiquette" pour désigner une étiquette électronique, indépendamment de son support et de son utilisation.

On utilisera généralement le terme de "portique" ou "station" pour désigner la station interrogatrice; la forme de cette station n'est pas limitée à la forme physique d'un portique.

De façon générale, pour une interrogation à distance d'étiquettes, les étiquettes présentent les fonctionnalités suivantes: possibilité de communication à distance avec la station, en réception ou en émission; conservation d'un code, éventuellement reprogrammable; élaboration des réponses de l'étiquette en fonction des questions reçues depuis la station. Dans de nombreuses applications, il est en outre intéressant que les étiquettes utilisent comme source d'énergie le champ émis par la station: une telle télé-alimentation permet d'éviter d'utiliser une source d'énergie dans l'étiquette, ce qui diminue sa taille et son coût.

On utilise dans la suite le mot "réception" pour la réception par l'étiquette des signaux fournis par la station, et le mot "émission" pour l'envoi par l'étiquette de signaux vers la station.

La présente invention concerne les fonctionnalités de communication à distance avec la station, en émission, ainsi que de télé-alimentation de l'étiquette. Elle concerne plus précisément un circuit d'alimentation et de modulation pour une étiquette interrogeable à distance

Diverses solutions ont déjà été proposées pour assurer la télé-alimentation des étiquettes et permettre la communication à distance vers la station.

Le document EP-A-0 751 622, déposé avant la date de priorité de la présente demande et publié après cette date, décrit un circuit intégré utilisant un circuit résonnant parallèle constitué d'un bobinage et de deux condensateurs. Un interrupteur peut interrompre le passage du courant dans un des condensateurs.

Le document EP-A-0 242 906 décrit diverses solutions à ce problème, comprenant l'utilisation d'un bobinage unique pour la télé-alimentation, la réception et l'émission.

Une première solution proposée consiste à redresser la tension fournie par un bobinage à l'aide d'une diode, et à filtrer cette tension par un condensateur pour obtenir une tension continue d'alimentation. Pour l'émission, on court-circuite le bobinage, de sorte à générer une variation de flux qui peut être détectée par la station.

Cette solution présente les inconvénients suivants. D'une part, il n'y a pas de surtension aux bornes du bobinage, de telle sorte que le circuit ne peut fonctionner que dans un champ inducteur de forte amplitude. D'autre part, pendant l'émission, aucune énergie n'est fournie au circuit de redressement et l'on ne peut pas se servir du signal reçu comme horloge.

Une deuxième solution proposée dans ce même document ou encore dans le document EP-A-0 405 695, consiste à utiliser un circuit résonnant parallèle constitué du bobinage et d'un condensateur d'accord; aux bornes de ce circuit résonnant sont montés des moyens pour assurer une alimentation et modifier les caractéristiques du circuit résonnant pour l'émission. Ces moyens comprennent typiquement un redresseur, tel qu'une diode et un condensateur. Comme dans la première solution, on prévoit pour l'émission de court-circuiter le bobinage

Cette solution présente les inconvénients suivants:
- la proximité d'étiquettes voisines désaccorde le circuit résonnant et réduit la surtension obtenue;
- des battements se produisent entre la fréquence du champ inducteur et la fréquence d'accord, ce qui perturbe les circuits de réception de l'étiquette;
- l'accord de la self augmente le courant qui la traverse et rend plus difficile la détection du courant provoqué par le court circuit pendant l'émission de la réponse;
- comme dans la première solution, pendant l'émission, aucune énergie n'est fournie au circuit de redressement et l'on ne peut pas se servir du signal reçu comme horloge.

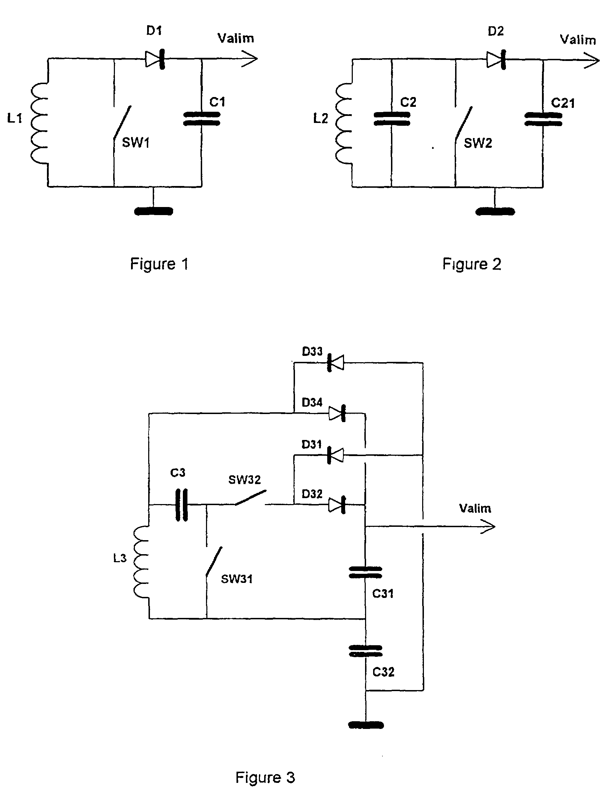

Les figures 1 et 2 montrent des circuits connus de ce type.

EP-A-0 592 224 décrit un système d'interrogation à distance dans lequel les étiquettes présentent un circuit LC résonant parallèle: Le document précise qu'un deuxième condensateur est monté en série avec circuit LC résonant parallèle. L'ensemble est monté aux bornes d'un transmetteur et permet de recevoir et de transmettre des signaux simultanément à des fréquences distinctes. La tension d'alimentation de l'étiquette est déduite de la tension induite par le champ inducteur. Ce document est actuellement considéré comme l'état de la technique le plus proche. Ce type de circuit ne convient qu'à des systèmes à accumulation d'énergie, dans lesquels les étiquettes accumulent l'énergie pendant la plupart du temps et ne répondent que par rafales brèves. Il est clair que l'étiquette de ce document ne pourrait pas être utilisée dans des applications où l'émission de l'étiquette est longue et nécessite de maintenir une tension suffisante pour les circuits logiques contrôlant l'émission.

L'invention permet d'obtenir plus L'invention permet d'obtenir plus d'énergie pour l'alimentation des circuits; elle permet aussi de continuer à alimenter les circuits de l'étiquette pendant l'émission, et d'utiliser même pendant la réponse une horloge générée par les signaux reçus de la station.

Pour cela , l'invention propose un circuit d'alimentation et de modulation, notamment pour une étiquette interrogeable à distance, comprenant
- un bobinage pour capter un champ inducteur et moduler ce champ;
- des moyens pour constituer avec le bobinage un circuit LC résonnant série en l'absence de modulation;
- des moyens pour constituer avec le bobinage un circuit LC résonnant parallèle pour moduler le champ inducteur.
- des moyens pour redresser une tension induite par le champ inducteur dans le bobinage pour fournir une tension d'alimentation, et en ce que le circuit LC résonnant série et le circuit LC résonnant parallèle présentent la même fréquence de résonnance, cette fréquence étant de préférence la fréquence du champ inducteur.

Dans un mode de réalisation, les moyens pour constituer un circuit LC résonnant série et les moyens pour constituer un circuit LC résonnant parallèle comprennent un condensateur commun.

Dans un autre mode de réalisation, les moyens pour redresser une tension induite comprennent des premiers moyens redresseurs branchés aux bornes du circuit LC résonnant série formé par les moyens pour constituer un circuit LC résonnant série en l'absence de modulation.

Les moyens pour redresser une tension induite peuvent comprendre des seconds moyens redresseurs branchés aux bornes du circuit LC résonnant parallèle formé par les moyens pour constituer un circuit LC résonnant parallèle pour moduler le champ inducteur.

Les moyens redresseurs peuvent comprendre un circuit doubleur.

Dans un mode de réalisation l'étiquette comprend en outre
- un condensateur relié par une première borne à une première borne du bobinage;
- des moyens d'interruption entre des secondes bornes du bobinage et du condensateur pour constituer un circuit LC parallèle pour la modulation lorsque lesdits moyens d'interruption sont fermés;
- des moyens redresseurs d'une tension dans le bobinage pour fournir une tension d'alimentation, branchés aux secondes bornes du bobinage et du condensateur.

Dans un mode de réalisation de ce circuit, les moyens redresseurs comprennent des moyens interrupteurs susceptibles d'être ouverts pour la modulation.

Dans un autre mode de réalisation, le circuit comprend des moyens redresseurs branchés aux bornes du bobinage et actifs quand les moyens d'interruption sont fermés

L'invention a enfin pour objet une étiquette interrogeable à distance, muni d'un tel circuit d'alimentation et de modulation.

D'autres avantages et caractéristiques de l'invention apparaîtront à la lecture de la description qui suit de différents modes de réalisation, donnés à titre d'exemple et en référence aux figures annexées, qui montrent:
- figure 1, un schéma de principe d'un premier circuit d'alimentation et de modulation connu;
- figure 2, un schéma de principe d'un premier circuit d'alimentation et de modulation connu;
- figure 3, un schéma de principe d'un circuit d'alimentation et de modulation selon un premier mode de réalisation de l'invention;
- figure 4, un schéma de principe d'un circuit d'alimentation et de modulation selon un deuxième mode de réalisation de l'invention.
- figure 5, une représentation graphique de tensions dans le montage de la figure 4.

La figure 1 montre un schéma de principe d'un premier circuit d'alimentation et de modulation connu, tel que par exemple celui décrit à la figure 2 du brevet EP-A-0 242 906.

Ce circuit comprend un bobinage L1, susceptible d'être court-circuité par un transistor SW1 pour l'émission. Le bobinage L1 est relié d'une part à la masse et d'autre part à une borne d'une diode D1 de redressement. Un condensateur C1 est relié d'une part à la masse et d'autre part à l'autre borne de la diode. Au point de contact entre la diode D1 et le condensateur C1, on obtient une tension d'alimentation Valim redressée et filtrée.

Les moyens d'actionnement du transistor SW1, qui sont alimentés par Valim, ne sont pas représentés, pas plus que les moyens d'analyse de la tension aux bornes du bobinage L1 nécessaire pour la réception.

Ce circuit présente les inconvénients mentionnés plus haut, à savoir absence de surtension et impossibilité d'utiliser la tension du bobinage L1 pendant l'émission.

La figure 2 montre un schéma de principe d'un premier circuit d'alimentation et de modulation connu, tel que par exemple celui décrit à la figure 1 du brevet EP-A-0 242 906.

Ce circuit est sensiblement analogue à celui de la figure 1, à cela près que le bobinage L1 est remplacé par un circuit résonnant parallèle comprenant un bobinage L2 et un condensateur C2.

Comme à la figure 1, les moyens d'actionnement du transistor SW1, qui sont alimentés par Valim, ne sont pas représentés, pas plus que les moyens d'analyse de la tension aux bornes du bobinage L2 nécessaire pour la réception.

Ce circuit présente les inconvénients mentionnés plus haut, à savoir un désaccord facile du circuit résonnant et une réduction corrélative de la surtension obtenue; des battements entre la fréquence du champ inducteur et la fréquence d'accord; une détection plus difficile du courant provoqué par le court circuit pendant l'émission; une impossibilité d'utiliser le bobinage L2 pendant l'émission.

Le problème de l'accord du bobinage est particulièrement gênant dans le cas des étiquettes: en effet, plusieurs étiquettes peuvent se trouver en vrac dans le volume de l'inducteur de la station. Lorsque le bobinage d'une étiquette est proche de celui des étiquettes voisines sa self augmente dans des proportions importantes, de l'ordre de 100 % si les bobinages se trouvent sur le même axe.

L'utilisation d'un condensateur d'accord en parallèle sur le bobinage, comme à la figure 2, fournit une augmentation de la tension, mais cette surtension est assez faible dans le pire cas puisque la proximité des bobinages voisins augmente la self, donc désaccorde le circuit.

L'invention permet de pallier ces problèmes.

La figure 3 montre un schéma de principe d'un circuit d'alimentation et de modulation selon un premier mode de réalisation de l'invention.

La structure du circuit de la figure 3 est la suivante. Un premier circuit doubleur D31, D32 avec deux condensateurs de filtrage C31 et C32, est branché aux bornes du montage en série d'un bobinage L3, d'un condensateur C3 et de moyens d'interruption SW32, tel qu'un transistor.

Des moyens d'interruption SW31, tel qu'un transistor sont susceptibles de court-circuiter le circuit résonnant série formé par le bobinage L3 et le condensateur C3.

Un deuxième circuit doubleur D33, D34, utilisant les deux mêmes condensateurs de filtrage C31 et C32, est branché aux bornes du bobinage L3.

Une tension d'alimentation Valim est prélevée en sortie des diodes D32 et D34. Les moyens de commande des transistors SW31 et SW32 ne sont pas représentés, pas plus que les moyens d'analyse de la tension aux bornes du bobinage L3.

Le fonctionnement du circuit de la figure 3 est le suivant.

En réception, ou en télé-alimentation, c'est à dire en dehors des périodes d'émission ou de modulation, SW31 est ouvert et SW32 est fermé; le redressement se fait alors par le circuit doubleur D31, D32 avec ses deux condensateurs de filtrage C31, C32.

Le courant dans L3 est alors simplement proportionnel au courant demandé pour l'alimentation des circuits, il est donc assez faible.

Pour l'émission ou la modulation, on ouvre SW32 et on ferme SW31.

Le circuit L3, C3 devient un circuit résonnant parallèle. Le courant dans le bobinage augmente nettement, ce qui rend sa détection plus facile.

L'invention présente les avantages suivants.

L'impédance de C3 se soustrait de l'impédance de L3 et permet de fournir plus d'énergie pour l'alimentation des circuits.

La surtension aux bornes de L3 est utilisable pour continuer à alimenter les circuits via le circuit doubleur D33, D34 avec ses deux condensateurs de filtrage C31, C32, pendant l'émission.

On peut encore détecter les passages à zéro de la tension aux bornes du bobinage L3 pour générer une horloge utilisable par les circuits logiques pendant l'émission.

On comprend aussi que l'invention assure une surtension aux bornes de L3, de sorte qu'il n'est pas indispensable d'utiliser un champ inducteur de la station de forte amplitude.

La variation de la self produite par la présence d'étiquettes voisines a peu d'incidence sur la tension Valim en fonctionnement normal. En outre, la détection du courant pendant l'émission est plus facile que dans le montage de la figure 2.

Par ailleurs, si le circuit L3 C3 résonnant série est accordé sur la fréquence du champ inducteur, on produit un courant important lorsque le switch SW31 se ferme, tout en maintenant une tension suffisante aux bornes de L3; ceci permet aussi de continuer à alimenter le circuit de redressement pendant l'émission des informations en retour.

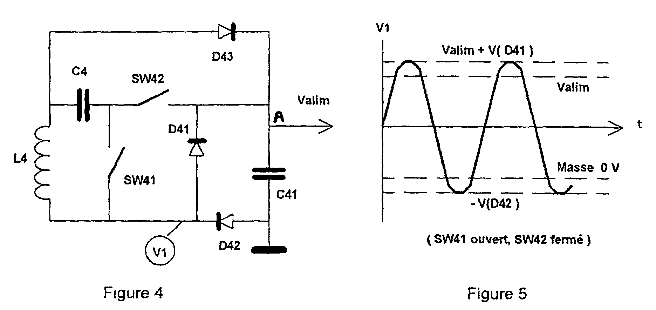

Il convient de noter qu'à l'inverse de la solution proposée dans EP-A-0 592 224, les circuits LC parallèle et série sont résonnants sur la même fréquence. Si cette fréquence est celle de l'inducteur, on assure une réception maximale et une modulation maximale en réponse. Ces remarques s'appliquent aussi pour ce qui est de la figure 4.

La figure 4 montre un schéma de principe d'un circuit d'alimentation et de modulation selon un deuxième mode de réalisation de l'invention.

Le circuit de la figure 4 présente un ensemble d'un bobinage L4, d'un condensateur C4, et de deux moyens d'interruption SW41 et SW42 analogue à l'ensemble L3, C3, SW31 et SW32 de la figure 3.

Une tension d'alimentation Valim est fournie en un point A, du côté de l'interrupteur SW42 opposé au condensateur C4.

Une diode D43 est branchée entre le bobinage L4 et le condensateur C4 d'une part, et le point A d'autre part; la diode est conductrice du bobinage vers le point A.

Un condensateur C41 est branché entre le point A et la masse.

Une diode D41 est branchée entre le point A et la borne du bobinage L4 non reliée au condensateur C4, et est conductrice vers le point A.

Une diode D42 est branchée entre la masse et la borne du bobinage L4 non reliée au condensateur C4, et est conductrice vers cette dernière.

Comme à la figure 3, les moyens de commande des transistors SW41 et SW42 ne sont pas représentés, pas plus que les moyens d'analyse de la tension aux bornes du bobinage L4.

Le fonctionnement du montage de la figure 4 est le suivant.

En l'absence d'émission SW41 est ouvert, SW42 est fermé et le circuit C4, D41, D42, C41 forme un doubleur de tension. La tension Valim est égale à la tension crête à crête fournie par L4, C4, moins les tensions de conduction des diodes D41, D42.

Pendant l'émission SW41 est fermé. SW42 est ouvert, L4, C4 devient un circuit résonnant parallèle, une surtension apparaît aux bornes de L4, ce qui permet de continuer à alimenter les circuits. Il s'agit alors d'un redressement mono alternance avec 2 diodes D42, D43 en série.

L'avantage de ce montage est qu'il ne nécessite que 2 condensateurs dont l'un seulement, C41, est de forte valeur.

Par ailleurs, ce montage assure aussi tous les avantages de celui de la figure 3.

La figure 5 montre une représentation graphique de tensions dans le montage de la figure 4. La figure 5 montre la tension V1 à la borne du bobinage L4 non reliée au condensateur C4. en fonctionnement hors émission, avec SW41 ouvert et SW42 fermé.

V1 présente une valeur crête à crête égale à la somme de Valim et des tensions de conduction des diodes D41 et D42.

On peut avantageusement utiliser l'invention pour la mise en oeuvre des procédés décrits dans les demandes de brevet de la demanderesse EP-A-777 194 et EP-A-777 192 déposées le même jour que la présente demande, sous les titres: "Procédé d'interrogation à distance d'étiquettes, station et étiquette pour sa mise en oeuvre", et "Procédé de mise en phase d'étiquettes électroniques, station d'interrogation et étiquette électronique pour sa mise en oeuvre". On notera tout particulièrement le procédé d'émission de cette dernière demande.

L'invention peut être réalisée par l'homme du métier sur la base des circuits des figures 3 et 4, par toute méthode habituelle: assemblage de composants discrets, circuits intégrés, etc.

Bien entendu, l'invention est susceptible de variations: on peut utiliser comme moyens d'interruption des transistors de tout type approprié.

A la place des diodes, on peut prévoir d'autres moyens redresseurs équivalents.

On peut utiliser pour l'invention des bobinages de tout type, en fonction de l'application.

L'invention peut aussi trouver d'autres applications que les étiquettes interrogeables à distance.

## Revendications

1. Circuit d'alimentation et de modulation, notamment pour une étiquette interrogeable à distance, comprenant
- un bobinage (L3, L4) pour capter un champ inducteur et moduler ce champ;
- des moyens pour constituer avec le bobinage (L3, L4) un circuit LC résonnant série en l'absence de modulation;
- des moyens pour constituer avec le bobinage (L3. L4) un circuit LC résonnant parallèle pour moduler le champ inducteur,
**caractérisé en ce qu'**il comprend en outre:
- des moyens pour redresser une tension induite par le champ inducteur dans le bobinage (L3, L4) pour fournir une tension d'alimentation;
et **en ce que** le circuit LC résonnant parallèle et le circuit LC résonnant série présentant la même fréquence de résonance.

2. Circuit selon la revendication 1, **caractérisé en ce que** la fréquence de résonance du circuit LC parallèle est égale à la fréquence du champ inducteur.

3. Circuit selon l'une des revendications 1 ou 2, **caractérisé en ce que** les moyens pour constituer un circuit LC résonnant série et les moyens pour constituer un circuit LC résonnant parallèle comprennent un condensateur (C3, C4) commun.

4. Circuit selon l'une des revendications 1 à 3, **caractérisé en ce que** les moyens pour redresser une tension induite comprennent des premiers moyens redresseurs branchés aux bornes du circuit LC résonnant série formé par les moyens pour constituer un circuit LC résonnant série en l'absence de modulation.

5. Circuit selon l'une des revendications 1 à 4, **caractérisé en ce que** les moyens pour redresser une tension induite comprennent des seconds moyens redresseurs branchés aux bornes du circuit LC résonnant parallèle formé par les moyens pour constituer un circuit LC résonnant parallèle pour moduler le champ inducteur.

6. Circuit selon la revendication 4 ou 5, **caractérisé en ce que** les moyens redresseurs comprennent un circuit doubleur.

7. Circuit selon l'une des revendications 1 à 6, : **caractérisé en ce que** il comprend en outre:
- un condensateur (C3, C4) relié par une première borne à une première borne du bobinage (L3, L4);
- des moyens d'interruption (SW31, SW41) entre des secondes bornes du bobinage (L3, L4) et du condensateur (C3, C4) pour constituer ledit circuit LC parallèle pour la modulation lorsque lesdits moyens d'interruption sont fermés;
par ailleurs **caractérisé en ce que** lesdits moyens redresseurs sont branchés aux secondes bornes du bobinage (L3, L4) et du condensateur (C3, C4).

8. Circuit selon la revendication 7, **caractérisé en ce que** les moyens redresseurs comprennent des moyens interrupteurs (SW32, SW42) susceptibles d'être ouverts pour la modulation.

9. Circuit selon la revendication 7 ou 8, **caractérisé en ce qu'**il comprend des moyens redresseurs branchés au bornes du bobinage (L2, L4) et actifs quand les moyens d'interruption (SW31, SW41) sont fermés.

10. Etiquette interrogeable à distance, muni d'un circuit d'alimentation et de modulation selon au moins une des revendications 1 à 9.

## Claims

1. A power and modulation circuit, notably for a remotely-pollable tag, comprising:
- coil means (L3, L4) for picking up an inductive field and modulating said field;
- means for constituting a series resonant LC circuit with said coil means (L3, L4) in the absence of modulation;
- means for constituting a parallel resonant LC circuit with said coil means (L3, L4) for modulating said inductive field;
**characterized in that** it further comprises :
- means for rectifying a voltage induced by said inductive field in said coil means (L3, L4) for providing a power supply voltage,
- and **in that** the series resonant LC circuit and the parallel resonant LC circuit have the same resonant frequency.

2. The circuit according to claim 1, **characterized in that** the resonant frequency of the parallel resonant LC circuit is the frequency of said inductive field.

3. The circuit according to claim 1 or 2, **characterized in that** said means for constituting a series resonant LC circuit and said means for constituting a parallel resonant LC circuit comprise a common capacitor (C3, C4).

4. The circuit according to one of claims 1 to 3, **characterized in that** the means for rectifying an induced voltage comprise first rectifying means connected across the terminals of said series resonant LC circuit formed by said means for constituting a series resonant LC circuit in the absence of modulation.

5. The circuit according to one of claims 1 to 4, **characterized in that** the means for rectifying an induced voltage comprise second rectifying means connected across the terminals of said parallel resonant LC circuit formed by the means for constituting a parallel resonant LC circuit for modulating said inductive field.

6. The circuit according to one of claims 4 to 5 , **characterized in that** said rectifying means comprise a voltage doubler circuit

7. The circuit according to one of claims 1 to 6, **characterized in that** it further comprises:
- a capacitor (C3, C4) a first terminal of which is connected to a first terminal of said coil means (L3, L4);
- switching means (SW31, SW41) provided between a second terminal of said coil means (L3, L4)and a second terminal of said capacitor (C3, C4) for constituting a parallel LC circuit providing modulation when said switching means are closed;
- and a circuit for rectifying a voltage in said coil means, for providing a supply voltage, connected to the second terminal of said coil means (L3, L4) and to the second terminal of said capacitor (C3, C4).

8. The circuit according to claim 7, **characterized in that** said rectifying circuit includes switching means (SW32, SW42) capable of being opened for modulation.

9. The circuit according to claim 7 or 8 **characterized in that** it comprises rectifying means connected across the terminals of said coil means (L3, L4), and active when said switching means (SW31, SW41) are closed.

10. A remotely-pollable tag provided with a power and modulation circuit according to at least one of claims 1 to 9.

## Patentansprüche

1. Schaltung zur Stromversorgung und Modulation, insbesondere für eine fernabfragbare Karte, bestehend aus:
einer Wicklung (L3, L4) zur Aufnahme eines Induktionsfeldes und Modulation dieses Feldes;
Mitteln zur Bildung mit Hilfe der Wicklung (L3, L4) eines LC-Serienresonanzkreises ohne Modulation;
Mitteln zur Bildung mit Hilfe der Wicklung (L3, L4) eines LC-Parallelresonanzkreises zur Modulation des Induktionsfeldes,
**dadurch gekennzeichnet, dass** die Schaltung ferner aufweist:
Mittel zum Gleichrichten einer durch das Induktionsfeld in der Wicklung (L3, L4) induzierten Spannung zur Erzeugung einer Versorgungsspannung;
und wobei der LC-Parallelresonanzkreis und der LC-Serienresonanzkreis die gleiche Resonanzfrequenz aufweisen.

2. Schaltung nach Anspruch 1, **dadurch gekennzeichnet, dass** die Resonanzfrequenz des LC-Parallelkreises der Frequenz des Induktionsfeldes entspricht.

3. Schaltung nach einem der Ansprüche 1 oder 2, **dadurch gekennzeichnet, dass** die Mittel zur Bildung eines LC-Serienresonanzkreises und die Mittel zur Bildung eines LC-Parallelresonanzkreises einen gemeinsamen Koridensator (C3, C4) aufweisen.

4. Schaltung nach einem der Ansprüche 1 bis 3, **dadurch gekennzeichnet, dass** die Mittel zum Gleichrichten einer induzierten Spannung aufweisen: erste Mittel zum Gleichrichten, die mit Anschlüssen des LC-Serienresonanzkreises verbunden sind, der durch die Mittel zur Bildung eines LC-Serienresonanzkreises ohne Modulation gebildet wurde.

5. Schaltung nach einem der Ansprüche 1 bis 4, **dadurch gekennzeichnet, dass** die Mittel zum Gleichnichten einer induzierten Spannung aufweisen: zweite Mittel zum Gleichrichten, die mit Anschlüssen des LC-Parallelresonanzkreises verbunden sind, der durch die Mittel zur Bildung eines LC-Parallelresonanzkreises zur Modulation des Induktionsfeldes gebildet wurde.

6. Schaltung nach Anspruch 4 oder 5, **dadurch gekennzeichnet, dass** die Mittel zum Gleichrichten eine Verdopplerschaltung umfassen.

7. Schaltung nach einem der Ansprüche 1 bis 6, **dadurch gekennzeichnet, dass** diese ferner aufweist:
einen über einen ersten Anschluß mit einem ersten Anschluß der Wicklung (L3, L4) verbundenen Kondensator (C3, C4);
Mittel zur Unterbrechung (SW31, SW41) zwischen den zweiten Anschlüssen der Wicklung (L3, L4) und dem Kondensator (C3, C4) zur Bildung des LC-Parallelresonanzkreises zur Modulation, wenn die Mittel zur Unterbrechung (SW31, SW91) geschlossen sind;
ferner **dadurch gekennzeichnet, dass** die Mittel zum Gleichrichten mit zweiten Anschlüssen der Wicklung (L3, L4) und des Kondensators (C3, C4) verbunden sind.

8. Schaltung nach Anspruch 7, **dadurch gekennzeichnet, dass** die Mittel zum Gleichrichten Mittel zur Unterbrechung (SW32, SW42) aufweisen, die zur Modulation geöffnet werden können.

9. Schaltung nach Anspruch 7 oder 8, **dadurch gekennzeichnet, dass** diese Mittel zum Gleichrichten umfaßt, die mit Anschlüssen der Wicklung (L2, L9) verbunden und aktiviert sind, wenn die Mittel zur Unterbrechung (SW31, SW41) geschlossen sind.

10. Fernabfragbare Karte mit einer Schaltung zur Versorgung und Modulation gemäß einem der Ansprüche 1 bis 9.
